# EUROPÄISCHE PATENTSCHRIFT

(11) **EP 2 385 102 B1**
(45) Veröffentlichungstag und Bekanntmachung des Hinweises auf die Patenterteilung: **16.03.2016**
(21) Anmeldenummer: 11003592.0
(22) Anmeldetag: 03.05.2011
(51) Int. Cl.: C12M 1/00, A01G 7/02, A01G 9/18, C02F 3/32, C02F 3/34, C02F 9/00

(54) **Verfahren zum Betrieb eines Biomassenreaktors, sowie Biomassenreaktor selbst**
Method for operating a biomass reactor and biomass reactor
Procédé de fonctionnement d'un réacteur de biomasse et réacteur de biomasse

(30) Priorität: 05.05.2010 DE 102010019352
(43) Veröffentlichungstag der Anmeldung: 09.11.2011
(73) Patentinhaber: Rogmans, Maria, 47546 Kalkar (DE)
(72) Erfinder: Hermann, Josef Wilhelm, 47546 Kalkar (DE)
(74) Vertreter: Schmidt, Karl Michael

(56) Entgegenhaltungen:
- EP-A1- 0 405 571
- WO-A1-00/32523
- WO-A2-2010/043323
- Vymazal, J; Kröpfelová, L: "Wastewater treatment in constructed wetlands with horizontal sub-surface flow; Series: Environmental pollution, volume 14", 2008, Springer, XP002689753, ISBN: 978-1-4020-8579-6 * Seite 121 - Seite 202 * * 4.3 Hybrid systems * * Abbildung 4.53 *
- Journey, W K; Skilllicorn, P; Spira, W: "Duckweed aquaculture, a new aquatic farming system for developing countries", 1993, The World Bank, Emena Technical Department, Agriculture Division, Washington, XP009164542, * das ganze Dokument *
- ZIMMELS Y ET AL: "Application and features of cascade aquatic plants system for sewage treatment", ECOLOGICAL ENGINEERING, ELSEVIER, AMSTERDAM, NL, Bd. 34, Nr. 2, 2. September 2008 (2008-09-02), Seiten 147-161, XP025407906, ISSN: 0925-8574, DOI: 10.1016/J.ECOLENG.2008.07.015 [gefunden am 2008-09-02]
- KARPISCAK M M ET AL: "MULTI-SPECIES PLANT SYSTEMS FOR WASTEWATER QUALITY IMPROVEMENTS AND HABITAT ENHANCEMENT", WATER SCIENCE AND TECHNOLOGY, IWA PUBLISHING, GB, Bd. 33, Nr. 10/11, 1. Januar 1996 (1996-01-01), Seiten 231-236, XP001120398, ISSN: 0273-1223, DOI: 10.1016/0273-1223(96)00424-6
- MALIK ET AL: "Environmental challenge vis a vis opportunity: The case of water hyacinth", ENVIRONMENT INTERNATIONAL, PERGAMON PRESS, US, Bd. 33, Nr. 1, 16. Dezember 2006 (2006-12-16), Seiten 122-138, XP005806089, ISSN: 0160-4120, DOI: 10.1016/J.ENVINT.2006.08.004
- KOERNER SABINE ET AL: "The capacity of duckweed to treat wastewater: Ecological considerations for a sound design.", JOURNAL OF ENVIRONMENTAL QUALITY, Bd. 32, Nr. 5, September 2003 (2003-09), Seiten 1583-1590, XP002689754, ISSN: 0047-2425
- JATIN SRIVASTAVA ET AL: "Managing water quality with aquatic macrophytes", RE/VIEWS IN ENVIRONMENTAL SCIENCE & BIO/TECHNOLOGY, KLUWER ACADEMIC PUBLISHERS, DO, Bd. 7, Nr. 3, 6. Juni 2008 (2008-06-06), Seiten 255-266, XP019614343, ISSN: 1572-9826
- JAYAWEERA ET AL: "Contribution of water hyacinth (Eichhornia crassipes (Mart.) Solms) grown under different nutrient conditions to Fe-removal mechanisms in constructed wetlands", JOURNAL OF ENVIRONMENTAL MANAGEMENT, ACADEMIC PRESS, LONDON, GB, Bd. 87, Nr. 3, 19. März 2008 (2008-03-19), Seiten 450-460, XP022542774, ISSN: 0301-4797, DOI: 10.1016/J.JENVMAN.2007.01.013
- DHIR BHUPINDER ET AL: "Potential of Aquatic Macrophytes for Removing Contaminants from the Environment", CRITICAL REVIEWS IN ENVIRONMENTAL SCIENCE AND TECHNOLOGY, CRC PRESS, Bd. 39, Nr. 9, 1. Januar 2009 (2009-01-01) , Seiten 754-781, XP008158845, ISSN: 1064-3389, DOI: 10.1080/10643380801977776
- SHAMMAS NAZIH K ET AL: "Natural Environmental Biotechnology", ENVIRONMENTAL BIOTECHNOLOGY 2010 HUMANA PRESS INC, 999 RIVERVIEW DR, STE 208, TOTOWA, NJ 07512-1165 USASERIES : HANDBOOK OF ENVIRONMENTAL ENGINEERING,, 1. Januar 2010 (2010-01-01), Seiten 567-622, XP008158844, DOI: 10.1007/978-1-60327-140-0_12

## Beschreibung

Die Erfindung betrifft ein Verfahren zum Betrieb eines Biomassereaktors, sowie Biomassereaktor selbst, in welchem Biomasse aus aquatischen Pflanzen erzeugt wird, gemäß Oberbegriff der Patentansprüche 1 und 7.
Aus der WO 2008/008262 A2 ist ein Biomassereaktor der gattungsgemäßen Art bekannt. Dort wird die Terminologie des PhotoBioreaktors gewählt.
Gemeint ist im Sinne dieser vorliegenden Erfindung also ein solcher Bioreaktor im Sinne eines Biomassenerzeugungsreaktors. Dabei ist aus dem genannten Dokument bekannt, den Reaktor wuchsfördernd mit CO₂-angereichertem Gas zu speisen.
Bei diesem bekannten Bioreaktor geht es um große Anlagen mit Landpflanzen unter einer Art Folientunneln. Die dort mit erwähnte Wasserversorgung betrifft nur die reine Wasserversorgung der Pflanzen.

Aus der WO 00/32523 ist eine Pflanzenkläranlage bekannt, bei welcher auf einer physikalische Behandlungsstufe ein horizontale Vorstufe mit aquatischen Pflanzen vorgesehen ist, bei welcher nacheinander durch nebeneinanderliegenden mit aquatischen Pflanzen besiedelte Wannen mit Abwasser durchströmt werden.
Durch die horizontale Anordnung ist die resultierende Aquakulturfläche erheblich begrenzt, und so sind solche Einrichtungen hinsichtlich der Leistungsfähigkeit stark limitiert. Aus der WO 2010/043323 A2 ist ein Verfahren und eine Einrichtung zur Kultivierung aquatischer Kulturen in einem Stapelsystem bekannt. Hierbei ergibt sich zumindest eine größere Aquakulturfläche auf einer gegebenen Grundfläche.
Aus der Veröffentlichung Jan Vymazal, Wastwater treatment in constructed wetlands with horizontal sub-surface flow, Series Environmental pollution, volume 13, 2008, Seite 121-202, ist ein Freilandsystem einer Pflanzenkläranlage unter anderem mit Eichhornia crassipes bekannt, bei welcher die Kulturflächen im wesentlichen horizontal angelegt sind. Auch eine solche Anlage hat einen extrem hohen Flächenbedarf.

Aus einer Reihe von Veröffentlichungen, sind Pflanzenkläranlagen einerseits und untersuchte Resorptionseigenschaften bezüglich bestimmter Inhaltsstoffe aus Abwässern andererseits bekannt, nämlich aus
Journey, W.K; Skillicorn, P; Spira, W: Duckweed Agriculture ..., 1993, The world bank, Emena Technical, Department, Agriculture Division, Washington. Die dort gezeigten Kulturanlagen sind Freilandkulturen, die einen ganz erheblichen Platzbedarf haben.
Aus der Veröffentlichung Zimmels Y et al, Applications and features of cascade aquatic plants system for sewage treatment, Ecological Engineering, Bd 34, Nr 2, 2. Sept. 2008 Seiten 147-161, sind Wasserpflanzenkulturen bekannt, die ebenfalls in einer Ebene nebeneinander platziert sind, und nacheinander bespült werden.
Aus der Veröffentlichung Karpiscak, M M et al, Multi-Species Plant,Systems for wastewater quality improvements and habitat enhancement, Water science and technology, GB, Band 33, Nr 10/11, 1. Jan. 1996, Seiten 231-236, ist es bekannt, Wasserhyazinthen-Kulturen nebeneinanderliegend zu anderen Kulturen zur Abwasserbehandlung zu platzieren. Auch diese Kulturviermethode findet in der Ebene statt mit einem enormen Flächenbedarf.

Aus der Veröffentlichung Körner, Sabine et al, "The capacity of duckweed to treat wastewater: Ecological considerations for a sound design.", Journal of environmental Quality, Bd 32, Nr 5, Sept 2003 Seiten 1583-1590, ist lediglich die generelle Einsetzbarkeit von Wasserlinsen zur Abwasserbehandlung bekannt. In der Veröffentlichung Jatin Srivastava et al: "Managing water quality with aquatic macrophytes", RE/VIEWS in Environmental Science & Bio/Technology, Bd 7, Nr 3, 6. Juni 2008 Seiten 255-266, warden verschiedene Werte für die Resorptionen verschiedener Inhaltsstoffe im Abwasser durch aquatische Pflanzen angegeben. Aber auch hierbei ist, wie bei allen genannten wissenschaftlichen Publikationen lediglich eine Kultivierung in einem horizontalen System, hier sogar nur in einer einzige Wannen vorgenommen.
Aus Jayaweera et al: "Contribution of water hyacinth (Eichhornia crassipes (Mart.) Solms) grown under different nutrient conditions to FE-removal mechanisms in constructed wetlands", Journal of environmental Management, Bd. 87, Nr 3, 19. März 2008 Seiten 450-460, sind verschiedene Resorptionseigenschaften zu verschiedenen Inhaltsstoffaufnahmen bei der Eichhornia angegeben. Aus der DHIR BHUPINDER et al: "Potential of aquatic macrophytes for removing contaminents from Environment", Critical Reviews in environmental science and technology, Bd 39, Nr 9, 1. Januar 2009 Seiten 754-781, sind auch nur Resorptionswerte für verschiedene aquatische Pflanzen angegeben. Ein Kultursystem ist ebenfalls nicht beschrieben. Aus der Veröffentlichung SHAMMAS NAZIH K et al: "Natural Environmental Biotechnology" SERIES Handbook of environmental engineering, 1. Januar 2010 Seiten 567-622, sind Freiland Pflanzenkläranlagen, die in einer Lage im Freiland kultiviert werden. Sofern in den genannten Veröffentlichungen Kulturanlagen für aquatische Pflanzen vorgeschlagen sind, befinden sich diese extrem raumgreifend in horizontaler Ausrichtung im Freiland.

Der vorliegenden Erfindung liegt daher die Aufgabe zugrunde einen Biomasseerzeugungsreaktor für aquatische Pflanzen so zu gestalten, dass auch im Umlauf des Wassers ein weiterer technischer Nutzen entsteht, und dass die Gabe von Düngemitteln auf wirtschaftlichere Weise erfolgt.
Die gestellte Aufgabe ist bei einem Verfahren der gattungsgemäßen Art erfindungsgemäss dadurch gelöst, dass im Biomassereaktor aquatische Pflanzenkulturen verschiedener Art angelegt sind, derart, dass das Abwasser zunächst einer Pflanzenkultur aus Eichhornia crassipes zugeführt wird, und dass erst nachfolgend das in diesen Kulturen auf diese Weise grob vorgereinigte Abwasser den übrigen aquatischen Pflanzenkulturen zugeführt wird.
Auf diese Weise können durch Anlegen einer aquatischen Mischkultur in einem Biomassereaktor, sehr grob und hoch belastete Abwässer, insbesondere aus dem anthropogenen Bereich eingeleitet werden, aber auch industrielle Abwässer und Abwässer aus Biogasanlagen. Die Eichhornia ist hochgradig geeignet bereits mit hohem Konzentrationen von Nitraten, aber auch Schwermetalle, sowie auch Stoffen wie Öströgenen, und pharmazeutischen Rückständen fertig zu werden, ohne dass die Pflanze selbst darunter leidet, aufgrund der Tatsache, dass die Generationszeit der Eichhornia etwa 14 Tage ist, und somit für eine vollständige Regeneration in eine neue Pflanzen-Generation nur so wenig Zeit benötigt, dass es zu keinen biologisch abträglichen Reaktionen im Wachstum dieser Pflanzen kommen kann. Der Aufkonzentration solcher Inhaltsstoffe wird dadurch Rechnung getragen, dass diese regelmäßig geerntete Eichhornia nachfolgend nur zu energetischen oder baumaterialischen Zwecken eingesetzt wird.

Diese Verfahrensweise eignet sich für die Anwendung auch in städtischen und großstädtischen Gebieten als Luft- und Wasserreinigung.

Zusätzlich erweisen sich folgende Abwasser, oder in Abwasser gelöste Abfallstoffe ganz hervorragend für den angegebenen Zweck.
- **Abwasser aus Siedlungsgebieten**
- **Industrielle Abwässer, insbesondere Abwässer aus der Zuckerherstellung, die mit Melasse oder vergorener Melasse beladen sind, Abwässer aus der Hefeproduktion, Abwässer mit Schlempe aus der Alkoholproduktion, mit Schwermetallen belastete Abwässer,**
- **Abwässer aus der Landwirtschaft, mit Gülle belanden, Wasser aus Teichen in denen Sickerwasser aus der Eutrophierten Anbauflächen anfallen,**
- **Abwässer aus der Biogasproduktion, in wasser gelöste Abfallstoffe des Gärbreies aus der Biogasproduktion,**
- **Abwässer aus chemischen Produktionsanlagen,**

Diese Abwässr erfüllen zu Teil sogar kumulativ zwei Eigenschaften. Sie enthalten wachstumsfördernde Nitrate und andere Inhaltstoffe, die ein herkömmliche Düngung der aquatischen völlig überflüssig macht. Zum anderen enthalten dies Abwässer zu Teil sogar Schwermetalle und übrogen Schadstoffe, wie pharmazeutische Rückstände, bspw Schmerzmittel und Östrogene etc. Eichhornia ist bekannt für die Aufnahme solcher Schadstoffe. D.h. das Wasser wird davon gereinigt.

Besonders vorteilhaft und wirkungsvoll ist dem technologischen Zusammenhang der Erfindung die Einbringung von Zucker (Kohlenhydraten) In der obene genannten Form als Abfallstoff. Insbesondere die Melasse aber auch andere Abfallstoffe der genannten Abwässer enthalten nicht verwerteten Zucker.
Da diese genannten Abwässer aber "zu entsorgende" Abwässer sind, ist deren Abnahme als Rohstoff für den erfindungsgemäßen Zweck eine "kostenlose" Kohlenhydratquelle.

In Anwendung auf die weiteren nachfolgend, mit diesem so vorgereinigten Abwasser bewässerten aquatischen Kulturen, sind die Schadstoffe so bereits entfernt, so dass die Biomasse der nachfolgenden aquatischen Kulturen schadstofffrei Biomasse sogar auf pharmazeutischem, oder nahrungsmitteltechnischem Niveau unterhalten werden kann. D.h. die Eichhorniakulturen werden so mit Abwässern beströmt, dass die Schadstoffe möglichst gänzlich entnommen, aber immer noch Nitrate etc im Wasser zur weiteren Ernährung der nachfolgenden Aquakulturen enthalten.

In weiterer vorteilhafter Ausgestaltung ist angegeben, dass in das Abwasser auch CO₂ als Kohlensäure gelöst wird. Dies ist generell für bekannte Aquakulturen wuchsfördernd. Insbesondere Lemnacea und Spirodela (Wasserlinse, Teichlinse) reagieren auf hohe CO₂-Gaben mit erheblicher Wuchssteigerung.

In weiterer vorteilhafter Ausgestaltung ist angegeben, dass die Kulturen innerhalb des Biomassereaktors in gestapelten Stellagen angeordnet sind, wobei die Eichhornia-Kulturen räumlich im oberen Bereich der Stellagen angeordnet sind und die übrigen aquatischen Kulturen unterhalb dessen angeordnet sind, derart, dass das den Eichhornia-Kulturen oben zugeführte Abwasser nach der erfolgten biologischen Vorreinigung unter Graviationswirkung in die darunter liegenden aquatischen Kulturen fließt. Diese ganz erheblich vorteilhafte Ausgestaltung kombiniert folgende Wirkungsweisen auf erheblich effiziente Art wie folgt.
Die Eichhornia hat von den meisten bekannten aquatischen Pflanzen die größte chemische Robustheit und die größte kumulierende Aufnahme von den genannten pharmazeutischen Abfallstoffen. Ebenso ist sie robust auch in Bezug auf ein stark saures Ambiente in Bezug auf Fekalien und Gülle.
Weiterhin verträgt sie hohe Temperaturen und starkes intensives auch kurzwelliges Licht.
Die wuchsfördernde Assimilation von CO₂ hingegen ist bei Eichhornia signifikant kleiner als bei den anderen genannten aquatischen Pflanzen. Da in dem Biomassereaktor das sowohl über das mit CO₂ befrachete Wasser ausgasende CO₂, als auch das direkt gasförmig eingespeiste CO₂ schwerer ist als Luft, ist die Konzentration des CO₂ unten im Biomassereaktor größer als oben.
Somit sind direkt unter dem Dach des als Gewächshaus angelegten Biomassereaktors hohe Temperaturen und hohe Beleuchtungstärke, bei niedrigerem CO₂-Anteil vorliegend. Dies ist die ideale Platzierung für die Eichhornia. Die darunterliegenden Lemnacea sind im erheblichen Maße eher Schwachlichtpflanzen.

In weiterer vorteilhafter Ausgestaltung ist angegeben, dass Ferribakterien (Rhodoferax ferrireducens) zumindest im Bereich der besagten beströmten Eichhornia-Kulturen mit in das Abwasser eingegeben werden.
Dies nun hat besondere Gründe, zur Effizienz der Vorreingung einerseits, aber vor allem auch der Zuführung vorkonditiernierten Wassers für die eigentlichen Biomasse erzeugenden, im wesentlichen aus Lemnacea und Spirodela und anderen Wasserlinsenarten bestehenden Aquakulturen im eigentlichen (strömungstechnisch nachfolgenden) Biomassereaktor.

Es zeigt die Beobachtung, dass innerhalb des Biomassereaktors die bspw Lemnaceakulturen neue Sorten enthalten, die auf Lichtschwachheit gezüchtet wurden. D.h, dass diese Pflanzen hohe Vermehrungsraten der Biomasse bei nur geringem Licht erzeugen. Der Lichtbedarf dieser Lemnacea, wie bspw die neue Sorte Henry Blanke CPVO 2009/0984, liegt bei nur ca 100 bis 200 Lux. Überleben kann diese NICHT GENTECHNISCH, SONDERN DURCH HERKÖMMLICHE ZÜCHTUNG generierte Spezies aber auch bei weniger als 50 Lux. Diese reproduzierte Beobachtung ist angesichts der Tatsache, dass dies nur etwa 1 Promille des Wertes von Tageslichtes entspricht.

Der normale Photosynthese-Wirkungsgrad bei Landpflanzen liegt bei bekanntermaßen etwa 1 %. Demnach können bekannte Landpflanzen nur 1 % Ihrer Photosyntheseleistung in Kohlenhydratproduktion umsetzen. Bei den aquatischen Spezies der genannten Lemnacea ist dieser Wert demnach deutlich höher. Demzufolge liegt in diesem Bereich bereits ein Potential von merh als einer Größenordnung verborgen.

Zur vorliegenden hohen Biomassepropagation sind aber die genannten weiteren Inhaltsstoffe maßgebend. Der Grund dafür ist einfach. Alle in das System eingespeisten Kohlenhydrat-Vorstufen oder Voprodukte, die die Pflanze aufnehmen kann müssen photosynthetisch nicht mehr in der Pflanze produziert werden.
Eine solche Rolle nehmen die speziellen, als Nahrungsquelle gewählten "Abwässer" ein. Die Inhaltsstoffe sind vielfältig und werden von aquatischen Kulturen DEUTLICH besser verstoffwechselt als von Landpflanzenkulkturen. Weiterhin ist beobachtet worden, dass die aus Ferribakterien bestehenden und den Lemnacea durch Wasser zugeführten Kahmhäute von den Lemnacea-Kulturen VOLLSTÄNDIG aufgenommen, d.h. verstoffwechselt werden. Diese enthalten die besagten Kohlenhydratvorstufen. Aus diesem Grund ist es so effizient, für die letztendliche hohe Biomassenerzeugung im Biomassereaktor diese Ferribakterien mit einzuspeisen, und zwar erfindungsgemäß bereits in die STARK ausleuchtete, nur in einer MONOLAGE angelegten Aquakultur der Vorreinigungsstufe, dort, wo sie also erheblichem Sonnenlicht ausgesetzt sind, und so die Kohlenhydrate bzw Kohlenhydratvorstufen besonders effizient erzeugen können. So wird nicht nur das stark belastete Abwasser durch die bspw Eichhornia Kulturen vorgereinigt, sondern durch die "photosynthetisch aktivierten" Ferribakterien wird quasi ein photonisch indirekter, da biochemisch gespeicherter Energiebeitrag der Ferribakterien in die nachfolgend beströmten Lemnacea-Kulturen gebracht.
So entstehen dann die hohen Biomasseraten der Lemnacea-Kulturen bei relativ schwachem Licht.

Technologisch hat dies aber die erhebliche Konsequenz, dass innerhalb des Biomassereaktor die Lemnacea-Kulturen Wegen des so nur geringen Lichtbedarfes in Stellagen gestapelt werden können. Die Stapelung erfolgt so, dass das einfallende Licht so in nahezu jedem Bereich etwa noch 100 bis 200 Lux erreicht. Auf diese Weise erst ist es möglich, auf einer Grundfläche von 1,5 Hektar eine Groß-Biomassenreaktors etwa 100 Hektar aquatische Produktionsfläche unterzubringen.

Zur Verdeutlichung nochmals die Basisreaktionen der (oxygenen) Photosynthese:

6CO₂ + 6 H₂O + hv -> C₆H₁₂O₆ + 6O₂

In der Glukose-Metabolisierung von Ferribakterien (bspw Rhodoferax ferrireducens) spielt aber auch die Umkehrreaktion eine Rolle:

C₆H₁₂O₆ + 6O₂ -> 6CO₂ + 6 H₂O + Energie

Bekanntermaßen wird die Energie in der zweiten Gleichung als Ladungsverschiebung, die an Elektroden abgreifbar ist, in sogenannten Mikrobiellen Zellen (Microbial fuel cells) energetisch genutzt.

Mit anderen Worten wird der Zucker-Stoffwechsel der Ferribakterien zur Erzeugung von Elektrizität auf biochemischem Wege genutzt.

Ferner ist die zweite Gleichung nicht weiteer als die Umkehrfunktion der oberen Gleichung.

Verzichtet man daher auf die elektrische Ladungstrennung mittels Elektroden, so bleibt die Energie im System, als letztlich biochemische Energie.

Mit anderen Worten werden die Kohlenhydrataktivierten Ferribakterien dann den Lemnacea-Kulturen weitergeleitet, so führt die beobachtete Verstoffwechselung der Ferribakterien durch die Lemnacea-Kulturen dann zu dem oben beschriebenen Effekt der Aufnahme von zusätzlichen Kohlenhydraten, ohne dass die Lemnacea zu dieser Menge an Kohlenhydraten hätte selbst Photosynthese durchführen müssen.

Dabei kommt es also zu einem "indirekten" photosynthetischen Eintrag, womit die hohem Biomasseraten bei so wenig Licht zu verstehen sind.

Aus dieser erfindungsgemäßen Zusammenführung all dieser Merkmale ergibt sich nun die Platzierung der Schwimmpflanzenkulturen der Vorreinigungsstufe, die insbesondere aus Eichhornia-Kulturen besteht und unter dem Dach als Vorreinigungsstufe des noch sehr stark belasteten Abwassers dient.
Hernach erfolgt die Weiterleitung des so vorgereinigten Abwassers zu den darunter liegenden Aquakulturen lediglich unter Einwirkung der Schwerkraft.

Eine weitere Alternative ist die Anordnung von Eichhornia-Kulturen in flachen lichtdurchlässigen Zulauf-Bereichen außerhalb des Bioreaktors/Gewächshauses.
Hier erfolgt die Vorreingung unter ganz erheblicher Einwirkung von Sonnenlicht mitsamt der keimtötenden Wirkung die dies haben kann. Gleichzeitig kumuliert die Eichhornia bis zu ihrer Ernte in nur wenigen (oder regelmäßige Teilernte alle 1 bis 3 Tage) Tagen erhebliche Mengen an pharmazeutischer und chemischer Schmutzfracht auf.

Diese Form der biologischen Vorreinigung ermöglicht das in Bezug auf die enthaltenen WERTVOLLEN Nährstoffe für alle Aquakulturen, so aber doch die bedenklichen Stoffe vorweg herauszufiltern. Wertvolle Nährstoffe für Aquakulturen liegen natürlich in anthropogenen Abwässern großen Mengen vor. Insbesondere die Eichhornia kann in direkten Abwasser existieren. Dies macht man sich hierbei zunutze, um eine Vorreinigung durch den Eichhornia-Stoffwechsel vorzunehmen, die die Schmutzfracht soweit reduziert, dass das Abwasser mit reduzierter bedenklicher (pharmazeutischer) Schmutzfracht aber immer noch genügend Nährstoffe für die nachfolgenden Lemnacea oder Spirodela-Kulturen aufweist. Auf diese Weise können nämlich die nachfolgenden Lemnacea-Kulturen trotz des Abwassers als Nährstoffzufuhr wegen der Vorreinigung bedenkenlos für chemische und nahrungsmitteltechnische Verwertungen eingesetzt werden.
Daher ist weiterhin vorteilhaft ausgestaltet, dass das nach Durchlaufen oder Verweilen in der Eichhornia-Kultur geführte Abwasser über eine Ventil- oder Strömungssbeeinflussung derart geregelt zu den übrigen Pflanzenkulturen abfließt, dass aufgrund der so einstellbaren Verweildauer des Abwassers in der Eichhornia-Kultur, das Abwasser zumindest bezüglich definierter Inhaltsstoffe effektiv vorgereinigt werden kann.
In weiterer vorteilhafter Ausgestaltung ist angegeben, dass die Eichhornia-Kulturen als Vorreinigungsstufe so platziert sind, dass diese hoher Sonnenlichtbeaufschlagung ausgesetzt sind, und dass in das Abwasser definierbare Mengen an CO₂ eingeleitet werden. Das harte UV-Licht und die thermische Beaufschlagung unterstützen den Reingungsprozess innerhalb der Vorreinigungsstufe noch ganz erheblich. Hier kommt eine weitere starke Eigenschaft der Eichhornia zum Tragen, nämlich ihre hohe Rebustheit gegenüber Sonnenlicht und hohen Temperaturen bis 45°C.

In weiterer vorteilhafter Ausgestaltung ist angegeben, dass die Eichhornia-Kultur als eine Abwasser-Nachreinigungstufe für das aus dem Biomassereaktor herausgeführte Abwasser angelegt wird. Auch diese Option besteht.

In Bezug auf einen Biomassereaktor besteht der Kern der Erfindung darin, dass im Biomassereaktor aquatische Pflanzenkulturen verschiedener Art angelegt sind, dass eine der aquatischen Kulturen als Abwasservorreinigungsstufe entweder innerhalb oder außerhalb des Biomassereaktors angeordnet ist, derart, dass ein maximal möglicher Eintrag von Sonnenlicht gegeben ist, und diese besagte Abwasservorreinigungsstufe.

In weiterer vorteilhafter Ausgestaltung ist angegeben, dass der Biomassereaktor zumindest teilgeschlossen ist, und mit Außenluft belüftbar ist, und den aquatischen Kulturen und/oder der Abwasservorreinigunsstufe CO₂ zugeführbar ist. Die aquatischen Kulturen benötigen schon aufgrund ihrer extrem kurzen Generationszeit (Verdopplung) von 1 bis 3 Tagen große Mengen an CO₂. Dabei ist wuchsfördernde Wirkung bis 5.000 ppm CO₂ ermittelt worden. Insbesondere die Lemnacea verträgt auch noch weit höhere Konzentrationen.

Demzufolge ist auch eine ausreichende Versorgung mit CO₂ für die Vorreinigungsstufe sowohl für die Eichhornia-Kulturen, als auch zur erstrebten bakterioziden und/oder fungiziden Wirkung hier ein kumulativer Effekt.

In vorteilhafter Ausgestaltung besteht die Vor- und/oder Nachreinigungsstufe demnach aus aquatischen Kulturen von Eichhornia cassipes.

Ferner ist zumindest die Vorreinigungsstufe in einer Traglufthalle implementiert. Diese besteht bekanntermaßen aus einem Foliendach OHNE statische Stützkonstruktion. Aufgestellt wird die Traglufthalle allein durch ein sogenanntes Stützgebläse, welches einen gegenüber außen höheren Innendruck herstellt. Diese wird aber bei dieser erfindungsgemäßen Ausgestaltung durch eine CO₂/LuftGemisch-Zufuhr ersetzt. Auf diese Weise wird nicht nur die Traglufthalle aufgerichtet, sondern es liegt eine hohe CO₂-Innenkonzentration vor, die erheblich wuchsfördernd ist.

Eine besondere Ausgestaltung ist, dass eine Vielfachanordnung von Biomassereaktoren vorgesehen ist, deren Wasserhaushalt über eine geschlossene oder teilgeschlossene Ringleitung so miteinander verbunden sind, dass aufeinanderfolgende Beströmung der aquatischen Kulturen zu einer sukzessiven Qualitätsverbesserung des ürsprünglich eingespeisten Abwassers führt. Wie gesagt erfolgt so durch die Anreihung von Biomassreaktoren eine stufenweise Verbesserung bis zum Erreichen von nahezu final gereingter Trinkwasserqualität.

Hierbei kommt es zu einer effektvollen Kumulation von Wirkungen. Nämlich eine geeignete Abwasserentsorgung,
Abwasserreinigung,
subventionierbare Nährstoffzufuhr,
gesteigerte Biomasseproduktion.
In weiterer vorteilhafter Ausgestaltung ist vorgesehen, dass die Ringleitung aus wasserschlüssigen Verbindungen in Form von zwischen den Biomassereaktoren angelegten Vorreinigungsstufen besteht, derart, dass sich ein geschlossenes durch alle Biomassereaktoren geführtes Wassersytem bildet, die ein sukzessive Wasserverbesserung bewirkt. Auf diese Weise ist eine Mehrfachanordnung von Biomassereaktoren möglich. Die zwischen den Biomassereaktoren angelegten wassrerschlüssigen Verbindungen sind einlagige Flutbecken, die bspw folienabgedeckt sind.
In weiterer vorteilhafter Ausgestaltung ist angegeben, dass zentral zu einer Vielfachanordnung von Biomassereaktoren ein flaches Wasserreservoir angeordnet ist, in welchem Wasserpflanzen und/oder Ferribakterien einer größeren zusammenhängenden Fläche der direkten Sonnenstrahlung ausgesetzt sind.
Die Erfindung ist in der Zeichnung dargestellt und nachfolgend näher beschrieben.

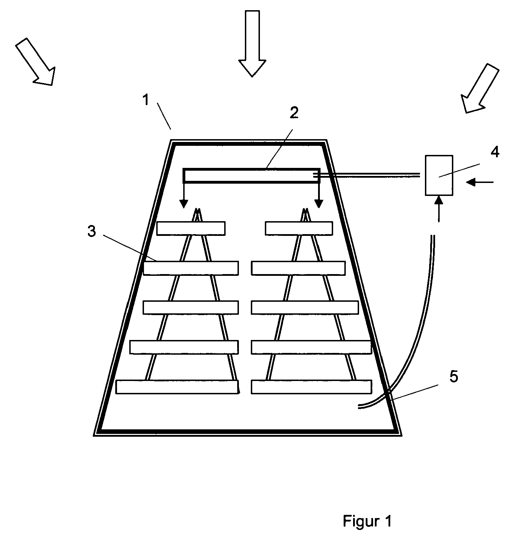

Figur 1 zeigt eine prinzipielle Darstellung eines Biomasseerzeugungsreaktors 1 der aus einer zumindest teilhermetisch abschließenden Außenhaut besteht, die aus Glas oder lichtdurchlässiger Folie bestehen kann. Innerhalb des Biomasseerzeugungsreaktors 1 sind gestapelte Stellage von Wannen 3 angeordnet, in denen aquatische Pflanzen, wie Wasserlinsen untergebracht sind. Oben, d.h. an der lichtreichsten und wärmsten Stelle im als Gewächshaus ausgebildeten Biomasseerzeungsreaktors 1 sind die Kulturen der Eichhornia 2 angelegt. Dort wird über einen Mischer dann auch das Abwasser zugeführt. Die Eichhornia-Kulturen verstoffwechseln große Teile der Schmutzfracht des Abwasser und reinigen somit das zugeführte Abwasser vor, bevor es dann in die tieferen Ebenen zu den übrigen aquatischen Pflanzen (Wasserlinsen) geführt wird.
Innerhalb des Reaktors 1 ist oder sind gekühlte Kondensationsflächen und das so gesammelt in großen Mengen anfallende Kondenswasser wird in einem Kondenswasserauffangbehältnis 6 gesammelt.
Das durch alle aquatische Kulturen geleitete Wasser wird sodann wieder gesammelt und dem Mischer 4 zurückgeführt, in dem dann das Abwasser wieder entsprechend auf gemischt wird.
Der gesamte Biomasseerzeugungsreaktor 1 ist außerdem noch CO₂-begast.

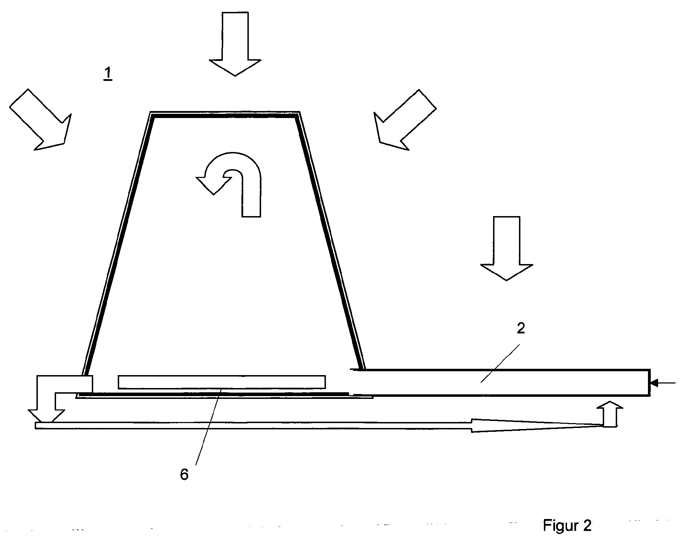

Figur 2 zeigt ein Ausführungsbeispiel, bei dem die Vorreinigungsstufe 2 außerhalb des eigentlichen Biomasseerzeugungsreaktors 1 angeordnet ist. Dort besteht die dort angelegte Eichhornia Kultur auch nur in einer flachen Anordnung und nimmt so optimal viel Licht auf. Der Stoffwechsel der Pflanzen dort, sowie das extreme Licht sorgen für eine effiziente Abwasservorreinigung.

Im Beispiel nach Figur 1 sowie auch nach Figur 2 werden erfindungsgemäß Ferribakterien zugegeben. Diese erzeugen unter Lichteinstrahlung dann die oben ausgeführten Kohlenhydratvorstufen, die von sämtlichen aquatischen Pflanzen, insbesondere von den nachfolgend von diesem Wasser beströmten Wasserlinsen verstoffwechselt werden, und so die oben beschriebene Teilsubstitution von Photosynthese-Energie zu liefern, da die nachfolgenden Wasserlinsen-Kulturen auf Schwachlicht gezüchtet sind, und somit ein Energieäquivalent für die erzeugten Biomassemengen benötigt.

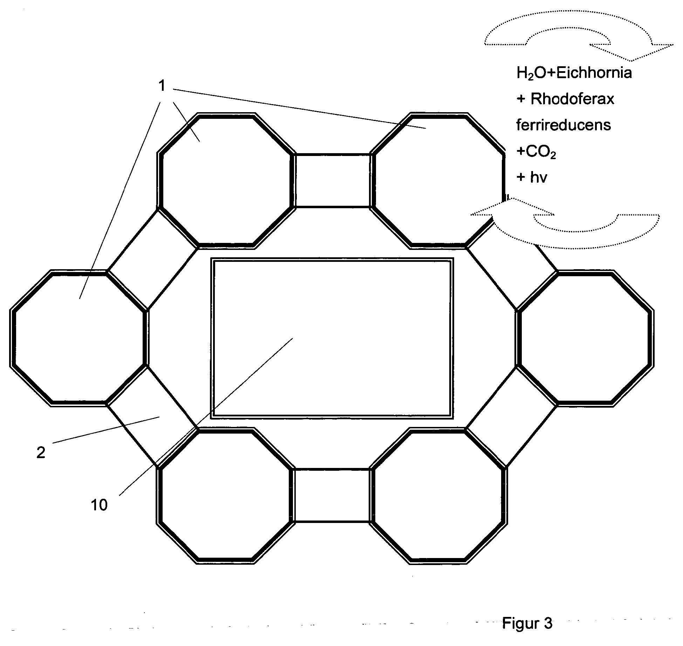

Figur 3 zeigt eine Mehrfachanordnung von Biomassereaktoren 1 die jeweils mit ebenfalls hermetisch zu den Biomasseerzeungsreaktoren anschließenden Verbindungsbecken 2 verbunden sind. Somit entsteht eine Ringleitung.
Auch hier wird an einer Stelle Abwasser mit Ferribakterien, z.B. mit Rhodoferax ferrireducens geimpft. Ferner sind die Verbindungsbecken 2 mit den Eichhornia gefüllt, die wie die andere Biomasse regelmäßig, täglich teilweise geerntet werden. Diese Anlage macht durch die sich ergebende Ringleitung, durch alle Aquakulturen eine sukzessive Wasserverbesserung, gleichzeitig zur Erzeugung hoher erntbarer Biomassen. Zentral ist dann noch ein Sammelbecken angeordnet, in dem entweder geklärte Wasser gesammelt werden kann, oder in den gezielt lichtaktive Ferribakterienmengen generiert werden können.

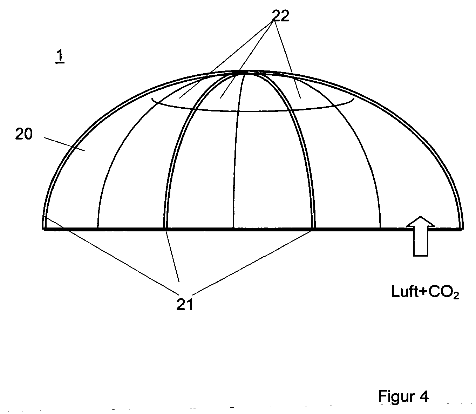

Figur 4 zeigt ein Beispiel, bei welchem die Außenhaut des Biomasseerzeungsreaktors 1 aus einer Traglufthalle besteht, in welcher die Stellagen mit den aquatischen Kulturen angeordnet sind. Diese ist bekanntermaßen hermetisch abgeschlossen und die Außenhaut enthält keine Stützkonstruktion, sondern wird durch ein Stützgebläse aufgeblasen. Innerhalb einer solchen Traglufthalle wird ein Druck von etwa 1,5 bis 1,8 Bar Überdruck gegenüber Außenluft eingestellt. Erfindungsgemäß pumpt hierbei das Stützgebläse aber ein Gemisch aus Außenluft und CO₂ ein. So werden hohe wuchsfördernde CO₂-Mengen an die aquatischen Pflanzenkulturen gebracht und ein optimales Wachstum bei geringen Baukosten der Anlage zu erreichen. Zusätzlich kann die Außenhaut Seilverstärkungen integriert enthalten, und bilden somit Rinnen zum Regenwasserablauf. Ferner besteht die Außenhaut aus Folie mit einer Lichtdurchlässigkeit im sogenannten PAR-Bereich.
In der Kuppel der Halle können in die Außenmhaut implementiert photovoltaische Elemente oder Folien eingebracht sein.

### Bezugszeichen:

- 1: Biomasseerzeugungsreaktor / Gewächshaus
- 2: Vorfluter / Vorreinigungskultur
- 3: Stellagen mit aquatischen Pflanzenkulturen
- 4: Mischer
- 5: Umlaufwasserrückführung
- 6: Kondensatwasserauffang

- 20: Außenhaut der Traglufthalle
- 21: Ablaufrinnen
- 22: Photovoltaische Elemente oder Folien

## Patentansprüche

1. Verfahren zum Betrieb eines Biomassereaktors in welchem Biomasse aus aquatischen Pflanzen erzeugt wird, bei welchem in den Wasserkreislauf des Biomassereaktors Abwässer aus industriellen Anlagen oder dem Abwassernetz von Wohnsiedlungen eingespeist werden, wobei im Biomassereaktor aquatische Pflanzenkulturen verschiedener Art angelegt sind, derart, dass das Abwasser zunächst einer Pflanzenkultur aus Schwimmpflanzen, insbesondere Eichhornia crassipes zugeführt wird,
und dass erst nachfolgend das in diesen Kulturen auf diese Weise grob vorgereinigte Abwasser den übrigen aquatischen Pflanzenkulturen zugeführt wird, **dadurch gekennzeichnet, dass** die Kulturen innerhalb des Biomassereaktors in gestapelten Stellagen angeordnet sind, derart, dass die Schwimmpflanzenkulturen der Vorreinigungsstufe Eichhornia-Kulturen sind und räumlich im oberen Bereich der Stellagen bei hohen Temperaturen und hoher Beleuchtungsstärke angeordnet sind und die übrigen aquatischen Kulturen unterhalb dessen angeordnet sind, derart, dass das den Eichhornia-Kulturen oben zugeführte Abwasser nach der erfolgten biologischen Vorreinigung unter Gravitationswirkung in die darunter liegenden aquatischen Kulturen fließt.

2. Verfahren nach Anspruch 1,
**dadurch gekennzeichnet,**
**dass** in das Abwasser auch CO₂ als Kohlensäure gelöst wird.

3. Verfahren nach Anspruch 1 oder 2,
**dadurch gekennzeichnet,**
**dass** Ferribakterien (Rhodoferax ferrireducens) zumindest im Bereich der besagten beströmten Eichhornia-Kulturen mit in das Abwasser eingegeben werden.

4. Verfahren nach einem der Ansprüche 1 bis 3,
**dadurch gekennzeichnet,**
**dass** das nach Durchlaufen oder Verweilen in der Vorreinigungsstufe (Eichhornia-Kulturen) geführte Abwasser über eine Ventil- oder Strömungsbeeinflussung derart geregelt zu den übrigen Pflanzenkulturen abfließt, dass aufgrund der so einstellbaren Verweildauer des Abwassers in der Eichhornia-Kultur, das Abwasser zumindest bezüglich definierter Inhaltsstoffe effektiv vorgereinigt werden kann.

5. Verfahren nach einem der vorhergehenden Ansprüche, **dadurch gekennzeichnet,**
**dass** die Schwimmpflanzenkulturen der Vorreinigungsstufe (Eichhornia-Kulturen) so platziert sind, dass diese hoher Sonnenlichtbeaufschlagung ausgesetzt sind, und dass in das Abwasser definierbare Mengen an CO₂ eingeleitet werden.

6. Verfahren nach einem der vorhergehenden Ansprüche, **dadurch gekennzeichnet,**
**dass** die Schwimmpflanzenkultur (Eichhornia-Kultur) als eine Abwasser-Nachreinigungstufe für das aus dem Biomassereaktor herausgeführte Abwasser angelegt wird.

7. Biomassereaktor in welchem Biomasse aus aquatischen Pflanzen erzeugt wird, bei welchem in den Wasserkreislauf des Biomassereaktors Abwässer aus industriellen Anlagen oder dem Abwassernetz von Wohnsiedlungen eingespeist werden,
und im Biomassereaktor aquatische
Pflanzenkulturen verschiedener Art angelegt sind,
**dadurch gekennzeichnet,**
**dass** die Kulturen innerhalb des Biomassereaktors in gestapelten Stellagen angeordnet sind, und dass die Schwimmpflanzenkulturen einer Vorreinigungsstufe Eichhornia-Kulturen sind und räumlich im oberen Bereich der Stellagen angeordnet bei hohen Temperaturen und hoher Beleuchtungsstärke sind und die übrigen aquatischen Kulturen unterhalb dessen angeordnet sind, derart, dass das den Eichhornia-Kulturen oben zugeführte Abwasser nach der erfolgten biologischen Vorreinigung unter Gravitationswirkung in die darunter liegenden aquatischen Kulturen fließt.

8. Biomassereaktor nach Anspruch 7,
**dadurch gekennzeichnet,**
**dass** der Biomassereaktor zumindest teilgeschlossen ist, und mit Außenluft belüftbar ist, und den aquatischen Kulturen CO₂ zuführbar ist.

9. Biomassereaktor nach Anspruch 8,
**dadurch gekennzeichnet,**
**dass** die Vorreinigungsstufe aus aquatischen Kulturen aus Eichhornia cassipes besteht bzw bestehen.

10. Biomassereaktor nach einem der Ansprüche 7 bis 9,
**dadurch gekennzeichnet,**
**dass** zumindest die Vorreinigungsstufe in einer Traglufthalle implementiert ist.

11. Biomassereaktor nach einem der Ansprüche 7 bis 10,
**dadurch gekennzeichnet,**
**dass** eine Vielfachanordnung von Biomassereaktoren vorgesehen ist, deren Wasserhaushalt über eine geschlossene oder teilgeschlossene Ringleitung so miteinander verbunden sind, dass aufeinanderfolgende Beströmung der aquatischen Kulturen zu einer sukzessiven Qualitätsverbesserung des ürsprünglich eingespeisten Abwassers führt.

12. Biomassereaktor nach Anspruch 11,
**dadurch gekennzeichnet,**
**dass** die Ringleitung aus wasserschlüssigen Verbindungen in Form von zwischen den Biomassereaktoren (1) angelegten Vorreinigungsstufen (2) besteht, derart, dass sich ein geschlossenes durch alle Biomassereaktoren geführtes Wassersytem bildet, die ein sukzessive Wasserverbesserung bewirkt.

13. Biomassereaktor nach Anspruch 11,
**dadurch gekennzeichnet,**
**dass** zentral zu einer Vielfachanordnung von Biomassereaktoren ein flaches Wasserreservoir angeordnet ist, in welchem Wasserpflanzen und/oder Ferribakterien einer größeren zusammenhängenden Fläche der direkten Sonnenstrahlung ausgesetzt sind.

## Claims

1. Method for operating a biomass reactor in which biomass is generated from aquatic plants, wherein wastewaters from industrial plants or from the wastewater network of residential developments are fed into the water circulation of the biomass reactor, the biomass reactor housing aquatic plant cultures of different kinds, such that the wastewater is first passed to a plant culture of free-floating plants, more particularly Eichhornia crassipes,
and that only subsequently is the wastewater roughly precleaned in this way in these cultures passed to the other aquatic plant cultures, **characterized in that** the cultures within the biomass reactor are arranged in stacked tiers, such that the free-floating plant cultures of the precleaning stage are Eichhornia cultures and are arranged spatially in the top region of the tiers at high temperatures and high illumination intensity and the other aquatic cultures are arranged below them, such that the wastewater passed at the top to the Eichhornia cultures, after the biological precleaning, flows under gravitation effect into the aquatic cultures situated below.

2. Method according to Claim 1, **characterized in that** additionally CO₂ as carbonic acid is dissolved into the wastewater.

3. Method according to Claim 1 or 2, **characterized in that** ferribacteria (Rhodoferax ferrireducens) are also put into the wastewater at least in the region of said flow-impinged Eichhornia cultures.

4. Method according to any of Claims 1 to 3, **characterized in that** the wastewater conveyed, after passage through or residence in the precleaning stage (Eichhornia cultures), flows off via valve or fluidic influence to the other plant cultures with regulation such that, on account of the thus-adjustable residence time of the wastewater in the Eichhornia culture, the wastewater can be precleaned effectively at least with regard to defined ingredients.

5. Method according to any of the preceding claims, **characterized in that** the free-floating plant cultures of the precleaning stage (Eichhornia cultures) are sited such that they are exposed to high sunlight action, and **in that** definable amounts of CO₂ are introduced into the wastewater.

6. Method according to any of the preceding claims, **characterized in that** the free-floating plant culture (Eichhornia culture) is laid out as a wastewater postpurification stage for the wastewater guided out from the biomass reactor.

7. Biomass reactor in which biomass is generated from aquatic plants, wherein wastewaters from industrial plants or from the wastewater network of residential developments are fed into the water circulation of the biomass reactor, and the biomass reactor houses aquatic plant cultures of different kinds, **characterized in that** the cultures within the biomass reactor are arranged in stacked tiers, and **in that** the free-floating plant cultures of a precleaning stage are Eichhornia cultures and, arranged spatially in the top region of the tiers, are at high temperatures and high illumination intensity, and the other aquatic cultures are arranged below them, such that the wastewater passed at the top to the Eichhornia cultures, after the biological precleaning, flows under gravitation effect into the aquatic cultures situated below.

8. Biomass reactor according to Claim 7, **characterized in that** the biomass reactor is at least partly closed, and can be aerated with external air, and CO₂ can be passed to the aquatic cultures.

9. Biomass reactor according to Claim 8, **characterized in that** the precleaning stage(s) consists or consist of aquatic cultures of Eichhornia crassipes.

10. Biomass reactor according to any of Claims 7 to 9, **characterized in that** at least the precleaning stage is implemented in an airhouse.

11. Biomass reactor according to any of Claims 7 to 10, **characterized in that** a multiple arrangement of biomass reactors is provided, their water contents being connected to one another via a closed or partly closed circuit line in such a way that successive flow impingement of the aquatic cultures results in a successive quality improvement of the wastewater originally fed in.

12. Biomass reactor according to Claim 11, **characterized in that** the circuit line consists of water-retaining connections in the form of precleaning stages (2) laid out between the biomass reactors (1), such that a closed water system guided through all the biomass reactors is formed that produces successive water improvement.

13. Biomass reactor according to Claim 11, **characterized in that** centrally to a multiple arrangement of biomass reactors, a flat water reservoir is arranged, in which water plants and/or ferribacteria are exposed to a relatively large contiguous area of direct solar radiation.

## Revendications

1. Procédé de fonctionnement d'un réacteur de biomasse dans lequel on produit une biomasse à partir de plantes aquatiques, dans lequel on introduit dans le circuit d'eau du réacteur de biomasse des eaux usée provenant d'installations industrielles ou du réseau des eaux usées de zones résidentielles, dans lequel on installe dans le réacteur de biomasse des cultures de plantes aquatiques de nature diverse, de telle manière que les eaux usées soient d'abord fournies à une culture de plantes flottantes, en particulier d'eichhornia crassipes, et que les eaux usées grossièrement pré-épurées de cette manière dans ces cultures soient seulement ensuite fournies aux autres cultures de plantes aquatiques, **caractérisé en ce que** l'on dispose les cultures à l'intérieur du réacteur de biomasse dans des cadres superposés, de telle manière que les cultures de plantes flottantes de l'étage de préépuration soient des cultures d'eichhornia et soient disposées spatialement dans la région supérieure des cadres à des températures élevées et sous une forte intensité d'éclairage et que les autres cultures aquatiques soient disposées en dessous de celles-ci, de telle manière que les eaux usées fournies par le haut aux cultures d'eichhornia s'écoulent, après la fin de la préépuration biologique, sous l'effet de la gravité dans les cultures aquatiques placées en dessous de celles-ci.

2. Procédé selon la revendication 1, **caractérisé en ce que** l'on dissout aussi du CO₂ dans les eaux usées comme acide carbonique.

3. Procédé selon la revendication 1 ou 2, **caractérisé en ce que** l'on ajoute des ferro-bactéries (Rhodoferax ferrireducens) dans les eaux usées au moins dans la région desdites cultures d'eichhornia exposées à l'écoulement.

4. Procédé selon l'une quelconque des revendications 1 à 3, **caractérisé en ce que**, après avoir circulé ou séjourné dans l'étage de préépuration (cultures d'eichhornia), les eaux usées s'écoulent de façon réglée vers les autres cultures de plantes sous l'influence de soupapes ou d'un écoulement, **en ce qu'**en raison de la durée de séjour ainsi réglable des eaux usées dans la culture d'eichhornia, les eaux usées peuvent être effectivement pré-épurées au moins en ce qui concerne des substances définies de leur contenu.

5. Procédé selon l'une quelconque des revendications précédentes, **caractérisé en ce que** l'on place les cultures de plantes flottantes de l'étage de préépuration (cultures d'eichhornia) de telle manière que celles-ci soient plus largement exposées à la lumière solaire, et **en ce que** l'on introduit dans les eaux usées des quantités définissables de CO₂.

6. Procédé selon l'une quelconque des revendications précédentes, **caractérisé en ce que** l'on installe la culture de plantes flottantes (culture d'eichhornia) comme étage de post-épuration d'eaux usées pour les eaux usées évacuées hors du réacteur de biomasse.

7. Réacteur de biomasse dans lequel on produit de la biomasse à partir de plantes aquatiques, dans lequel des eaux usées provenant d'installations industrielles ou du réseau des eaux usées de zones résidentielles sont introduites dans le circuit d'eau du réacteur de biomasse et des cultures de plantes aquatiques de nature diverse sont installées dans le réacteur de biomasse, **caractérisé en ce que** les cultures sont disposées à l'intérieur du réacteur de biomasse dans des cadres superposés, et **en ce que** les cultures de plantes flottantes d'un étage de préépuration sont des cultures d'eichhornia et sont disposées spatialement dans la région supérieure des cadres à des températures élevées et sous une forte intensité d'éclairage et les autres cultures aquatiques sont disposées en dessous de celles-ci, de telle manière que les eaux usées, fournies par le haut aux cultures d'eichhornia, s'écoulent sous l'effet de la gravité, après la fin de la préépuration biologique, dans les cultures aquatiques situées en dessous de celles-ci.

8. Réacteur de biomasse selon la revendication 7, **caractérisé en ce que** le réacteur de biomasse est au moins partiellement fermé, et peut être aéré avec de l'air extérieur, et du CO₂ peut être fourni aux cultures aquatiques.

9. Réacteur de biomasse selon la revendication 8, **caractérisé en ce que** l'étage de préépuration se compose de cultures aquatiques se composant d'eichhornia crassipes.

10. Réacteur de biomasse selon l'une quelconque des revendications 7 à 9, **caractérisé en ce qu'**au moins l'étage de préépuration est mis en oeuvre dans une structure pneumatique.

11. Réacteur de biomasse selon l'une quelconque des revendications 7 à 10, **caractérisé en ce qu'**il est prévu un agencement multiple de réacteurs de biomasse, dont les régimes hydriques sont reliés l'un à l'autre par une conduite circulaire fermée ou partiellement fermée, de telle manière qu'une circulation successive à travers les cultures aquatiques conduise à une amélioration successive de la qualité des eaux usées initialement introduites.

12. Réacteur de biomasse selon la revendication 11, **caractérisé en ce que** la conduite annulaire se compose de liaisons hydriques sous la forme d'étages de préépuration (2) installés entre les réacteurs de biomasse (1), de telle manière qu'il se forme un circuit d'eau fermé mené à travers tous les réacteurs de biomasse, qui conduit à une amélioration successive de l'eau.

13. Réacteur de biomasse selon la revendication 11, **caractérisé en ce qu'**un réservoir d'eau plat est disposé au centre d'un agencement multiple de réacteurs de biomasse, dans lequel des plantes aquatiques et/ou des ferro-bactéries d'une plus grande surface continue sont exposées au rayonnement solaire direct.
